# EUROPÄISCHE PATENTSCHRIFT

(11) **EP 3 043 048 B1**
(45) Veröffentlichungstag und Bekanntmachung des Hinweises auf die Patenterteilung: **19.09.2018**
(21) Anmeldenummer: 15201941.0
(22) Anmeldetag: 22.12.2015
(51) Int. Cl.: F02D 19/10, F02M 43/04, F02M 45/08, F02B 19/12, F02M 21/02

(54) **BRENNGASZUFÜHRUNGS- UND ZÜNDVORRICHTUNG FÜR EINEN GASMOTOR**
COMBUSTION GAS FEEDING AND IGNITION DEVICE FOR A GAS ENGINE
DISPOSITIF D'AMORÇAGE ET D'ALIMENTATION EN GAZ COMBUSTIBLE POUR UN MOTEUR A GAZ

(30) Priorität: 07.01.2015 AT 500062015
(43) Veröffentlichungstag der Anmeldung: 13.07.2016
(73) Patentinhaber: Hoerbiger Kompressortechnik Holding GmbH, 1220 Wien (AT)
(72) Erfinder: Könczöl, Martin, 2753 Markt Piesting (AT); Kogler, Gerhard, 1230 Wien (AT); Steinrück, Peter, 4830 Hallstatt (AT)
(74) Vertreter: Patentanwälte Pinter & Weiss OG

(56) Entgegenhaltungen:
- WO-A1-2012/072881
- WO-A1-2014/186893
- CA-A1- 2 743 043
- JP-A- H1 026 058
- US-A1- 2014 196 686

## Beschreibung

Die gegenständliche Erfindung betrifft ein Verfahren zum Betreiben eines Gasmotors bei dem während des Kompressionshubes Luft oder ein Luft/Abgasgemisch in einem Zylinder des Gasmotors komprimiert wird und die komprimierte Luft in eine Vorbrennkammer gedrückt wird, in die Vorbrennkammer zur Ausbildung eines Luft/Zündbrennstoff-Gemisches ein Zündbrennstoff zugeführt wird, vor dem Ende des Kompressionshubes ein Hauptbrenngas in eine Hauptbrennkammer des Zylinders zugeführt wird und das Luft/Zündbrennstoff-Gemisch in der Vorbrennkammer gezündet wird, wodurch heißes Verbrennungsgas von der Vorbrennkammer in die Hauptbrennkammer strömt und dort das eingeblasene Hauptbrenngas entzündet.

Außerdem betrifft eine Brenngaszuführungs- und Zündvorrichtung für einen Gasmotor mit einer Brennraum-Einspritzdüse, in der eine Anzahl von Einspritzkanälen für ein Hauptbrenngas vorgesehen sind und die Einspritzkanäle mit einer Hauptbrenngas-Zuführleitung für Hauptbrenngas verbunden sind, in der Brennraum-Einspritzdüse eine Anzahl von Fackelkanälen für heißes Verbrennungsgas vorgesehen sind und die Fackelkanäle mit einer Vorbrennkammer in der Brenngaszuführungs- und Zündvorrichtung verbunden sind, wobei in die Vorbrennkammer eine Zündbrennstoff-Zuführleitung mündet und in der Zündbrennstoff-Zuführleitung ein Vorbrennkammerventil angeordnet ist, wobei das Vorbrennkammerventil als elektrisch betätigtes, elektronisch gesteuertes Ventil ausgeführt ist, wobei zur Steuerung des Vorbrennkammerventils und des Hauptbrenngasventils ein Motorsteuergerät vorgesehen ist.

Unter einem Gasmotor wird im Sinne der gegenständlichen Erfindung ein Verbrennungsmotor mit einem Kolben, insbesondere mit einem hin- und hergehenden Kolben, verstanden, also ein Kolbenmotor.

Die bekannten Brennverfahren fremdgezündeter Gasmotoren beruhen auf dem Prinzip, dass entweder brennfähiges Gemisch dem Arbeitsraum während der Füllung des Zylinders im Saugtakt zugeführt wird, oder im Arbeitsraum durch Einspritzung von Brenngas während des Verdichtungstaktes gebildet wird. Das brennfähige Gemisch wird dann durch Funkenzündung oder Einspritzung einer kleinen Menge von selbstentzündlichem flüssigem Kraftstoff gezündet. Hier ist der für die Verbrennung vorgesehene Brennstoff bereits mit der Verbrennungsluft vermischt, wenn gezündet wird. Die Zündung kann dabei direkt im Zylinder erfolgen oder indirekt durch Zündung in einer Vorbrennkammer. Dabei erfolgt die Zündung in der Vorbrennkammer durch Funkenzündung, was einen aus der Vorbrennkammer in eine Hauptbrennkammer (Zylinder) austretenden Heißgasstrahl verursacht, der das brennfähige Gemisch in der Hauptbrennkammer entflammt, wobei das brennfähige Gemisch anschließend von im allgemeinen turbulenten Flammenfronten durchwandert wird. Durch Zündung in der Hauptbrennkammer und die solcherart erzielte Druckerhöhung wird im Arbeitstakt am Kolben die erwünschte mechanische Nutzarbeit verrichtet. Diese sehr bewährten und grundsätzlich robusten Brennverfahren haben allesamt den Nachteil, dass diese bei ungünstigem Brennstoff/Luftverhältnisses zu Fehlzündungen oder Vorzündungen neigen, welche zu hohen Schadstoffemissionen, schlechten Wirkungsgrad und/oder extremen mechanischen Belastungen führen können. Solche Fehl- oder Vorzündungen gefährden den sicheren und zuverlässigen Betrieb des Gasmotors. Insbesondere können schnelle Laständerungen zu der oben beschriebenen ungünstigen Variationen des Brennstoff/Luftverhältnisses führen. Dadurch ist der Einsatz von Gasmotoren bei hohen Anforderungen an die Lastwechselgeschwindigkeit begrenzt.

Eine bekannte Lösung, diesen Nachteil zu überwinden findet sich beispielsweise in US 8,800,529 B2 in welcher ein luftansaugendes Brennverfahren beschrieben wird, bei denen Luft im Saugtakt angesaugt und im Verdichtungstakt verdichtet wird und das Hauptbrenngas, ähnlich wie Dieselkraftstoff bei selbstzündenden Dieselmotoren, erst knapp bevor der Kolben den oberen Totpunkt erreicht über eine Mehrlochdüse eingespritzt wird. Wegen des Umstandes, dass Gas eine sehr hohe Selbstentzündungstemperatur aufweist, wird das Hauptbrenngas mittels einer sogenannten Piloteinspritzung, bei der eine kleine Menge von selbstentzündlichem flüssigem Kraftstoff in den Hauptbrennraum eingespritzt wird, entzündet. Die Verbrennung des Hauptbrenngases verläuft dann als Diffusionsverbrennung entlang der Oberfläche der Hauptbrenngasstrahlen. Die Diffusionsverbrennung erfolgt bekanntermaßen ohne Vormischung von Luft und Brennstoff, indem der zur Verbrennung notwendige Sauerstoff über den Flammenrand in die Flamme hinein diffundiert. Die Flamme "saugt" daher zur Verbrennung Sauerstoff aus der unmittelbaren Umgebung an. Die Flamme wird deshalb zum Flammenkern hin immer schlechter mit Sauerstoff versorgt und der Brennstoff verbrennt im Flammenkern nur zum Teil. Da bei diesem Brennverfahren aber nur Luft verdichtet wird, besteht dafür keine Gefahr einer Vorzündung. Fehlzündungen werden durch die sehr sichere Selbstentzündung des flüssigen Kraftstoffes bei der Piloteinspritzung verhindert.

Aus der EP 520 659 A1 und der EP 778 410 A1 sind Einspritzventile für ein solches Brennverfahren, auch Dual-Fuel Ventile genannt, bekannt. Im Einspritzventil sind die Ventile für die Einspritzung von gasförmigen Brennstoff für die Verbrennung und von flüssigem Brennstoff für die Piloteinspritzung zur Zündung konzentrisch angeordnet.

Der wesentliche Nachteil dieses Brennverfahren liegt in der Notwendigkeit zwei Kraftstoffe, nämlich Hochdruckgas als Hauptbrenngas und Dieselkraftstoff zur Piloteinspritzung, bereitzustellen und die dafür nötigen dualen Speicher und Versorgungseinrichtungen vorzusehen.

Die US 2,799,255 A beschreibt einen luftansaugenden, fremdgezündeten Gasmotor, der mit Erdgas betrieben wird und der nach dem Diffusionsbrennverfahren arbeitet. Um den Gasmotor in allen Lastbereichen sicher und zuverlässig zünden zu können, wobei Fehl- und Vorzündungen vermieden werden sollen, ist eine Vorbrennkammer vorgesehen, die über einen Strömungskanal mit dem Zylinderraum bzw. dem Hauptbrennraum im Zylinder verbunden ist. Während der Kompression wird Luft im Zylinder komprimiert und die komprimierte Luft gleichzeitig in die Vorbrennkammer zugeführt. In die Vorbrennkammer wird Brennstoff unter Druck zugeführt, der sich mit der komprimierten Luft in der Vorbrennkammer vermischt. Das Mischungsverhältnis zwischen Brennstoff und Luft in der Vorbrennkammer soll dabei so bemessen sein, dass das Brennstoff/Luft-Gemisch nicht selbstständig zünden kann. Vor dem Ende des Kompressionshubes wird in den Hauptbrennraum gasförmiger Hauptbrennstoff in der für die jeweilige Last notwendigen Menge zugeführt. Kurz vor dem Ende des Kompressionshubes wird dann das Brennstoff/Luft-Gemisch in der Vorbrennkammer mittels einer Zündkerze gezündet. Das heiße Verbrennungsgas strömt durch den Strömungskanal in den Hauptbrennraum, In diesen Gasstrom wird der Strom des gasförmigen Hauptbrennstoffes gerichtet, wodurch eine turbulente Durchmischung des Hauptbrennstoffes mit der komprimierten Luft erfolgt und wodurch das Hauptbrennstoff/LuftGemisch gezündet wird. Die Verbrennung des Hauptbrennstoff/Luft-Gemisches erfolgt dabei entlang einer Flammenfront in Form eines Diffusionsbrennverfahrens.

Die Steuerung der Zuführung von Brennstoff in die Vorbrennkammer und von Hauptbrennstoff in die Hauptkammer erfolgt in der US 2,799,255 A über eine mechanische Zwangssteuerung mittels eines Nockentriebs. Dabei betätigt die Nockenwelle einen Kipphebel, der auf Ventilstößel der Ventile für den Brennstoff und den Hauptbrennstoff wirkt, wobei die Ventilstößel über den Kipphebel auch zwangssynchronisiert sind. Die zugeführte Menge an Brennstoff bzw. Hauptbrennstoff ist damit festgelegt, ebenso wie das resultierende Brennstoff/Luft-Gemisch und Hauptbrennstoff/Luft-Gemisch. Selbstzündung durch Kompressionserwärmung kann dabei aber nicht sicher verhindert werden. Gleichfalls können Fehlzündungen durch ein zu mageres Gemisch in der Vorbrennkammer nicht ausgeschlossen werden. Das kann insbesondere dann problematisch sein, wenn der Brennstoff oder der Hauptbrennstoff mit variierenden Qualitäten zugeführt wird, was bei natürlichen Brennstoffen wie Erdgas durchaus der Fall sein kann. In der US 2,799,255 A ließe sich diese Situation nur dadurch verbessern, dass der Druck von Brennstoff und/oder Hauptbrennstoff verändert wird, um die nötige Anpassung zu erzielen. Wegen der inhärenten Trägheit der Druckreglung kann die Einspritzung damit während schneller Lastwechsel nicht schnell genug nachgeführt werde, weshalb ein sicheres Zünden, insbesondere bei schnellen Lastwechseln, nicht gewährleistet werden kann.

Auch die DE 10 2014 000 229 A1, bzw. die dazu korrespondierende US 2014/0196686 A1, beschreibt einen Gasmotor mit einem Diffusionsbrennverfahren. Darin kann die Menge an Hauptbrennstoff für die Verbrennung in der Hauptbrennkammer aber nur indirekt über ein Nadelventilglied, das von einem Steuerventil auf der Niederdruckseite des Nadelventilglieds betätigt wird, gesteuert werden. Das macht es schwieriger, die Menge der Einspritzung von Hauptbrenngas und damit die Verbrennung in der Hauptbrennkammer zu kontrollieren.

WO 2014/186893 A1 offenbart einen Treibstoffinjektor mit einem ersten Nadelventil zur Einspritzung eines gasförmigen Treibstoffs und einem zweiten Nadelventil zur Einspritzung eines flüssigen Treibstoffs.

WO 2012/072881 A1 offenbart eine Einspritzeinheit für große Verbrennungsmotoren mit einem Common-Rail-System, wobei zwei unterschiedlich große Einspritzventile vorgesehen sind, die über jeweils ein Steuerventil betätigt werden.

Um die Probleme des bekannten Standes der Technik zu lösen, ist erfindungsgemäß einerseits vorgesehen, dass vor dem Zünden des Luft/Zündbrennstoff-Gemisches in der Vorbrennkammer nochmals Zündbrennstoff in die Vorbrennkammer zugeführt wird, um das Luft/Zündbrennstoff-Gemisch in der Vorbrennkammer aufzufetten. Durch diese Mehrfacheinspritzung wird mit einer ersten Einspritzung in der Vorbrennkammer ein sehr mageres Luft/Zündbrennstoff-Gemisch erzeugt, das sicher nicht selbstständig zünden kann. Erst zum Zeitpunkt der gewünschten Zündung wird durch eine zweite Einspritzung das Luft/Zündbrennstoff-Gemisch aufgefettet und fremdgezündet. Abgesehen davon wird durch die zweite Einspritzung auch die Temperatur des Luft/Zündbrennstoff-Gemisch in der Vorbrennkammer gesenkt, was die Gefahr einer unerwünschten Vorzündung weiter reduziert. Damit können Vor- und Fehlzündungen weitestgehend verhindert werden.

Bei der eingangs genannten Brenngaszuführungs- und Zündvorrichtung kann in der Hauptbrenngas-Zuführleitung ein Hauptbrenngasventil angeordnet sein, das als elektrisch betätigtes, elektronisch gesteuertes Ventil ausgeführt ist, und neben dem Vorbrennkammerventil auch das Hauptbrenngasventil als elektrisch betätigtes, elektronisch gesteuertes Ventil ausgeführt ist. Das ermöglicht es einerseits, sowohl den Zeitpunkt, als auch die Dauer und damit auch die Menge der Einspritzung von Hauptbrenngas und auch von Zündbrennstoff für die Vorbrennkammer vollkommen unabhängig voneinander genau und vor allem auch schnell zu steuern. Damit kann einerseits rasch auf sich ändernde Eigenschaften des Hauptbrenngases und/oder des Zündbrennstoffes reagiert werden und andererseits kann damit die Einspritzung auch auf unterschiedliche Lastzustände angepasst werden. Das ermöglicht es insbesondere auch eine sichere Zündung und eine optimale Verbrennung bei raschen Lastwechseln sicherzustellen. Die erfindungsgemäße Brenngaszuführungs- und Zündvorrichtung kann hierbei sowohl für 4-Takt Gasmotoren und für 2-Takt Gasmotoren eingesetzt werden. Durch die Verwendung von elektrisch betätigten, elektronisch gesteuerten Ventilen kann aber auch das erfindungsgemäße Zündverfahren realisiert werden.

Andererseits kann zwischen Hauptbrenngas-Zuführleitung und den Einspritzkanälen ein mechanisches, differenzdruckbetätigtes Ventil, das vom Druck des Hauptbrenngases gesteuert ist und das die Einspritzkanäle verschließt oder sperrt, vorgesehen sein. Damit kann zum einen erreicht werden, dass das Hauptbrenngasventil lokal von den thermisch hoch belasteten Bereichen entfernt angeordnet werden kann. Zum anderen ermöglicht das auch eine sehr kompakte Ausführung der Brenngaszuführungs- und Zündvorrichtung, die damit im Bereich des Zylinderkopfes, in dem auch die Ventile angeordnet sind, angeordnet werden kann. Nicht zuletzt kann damit auch der entstehende Totraum für das Hauptbrenngas reduziert werden, wodurch auch die Schadstoffemissionen des Gasmotors reduziert werden können und weniger Raum vorhanden ist, der verschmutzen könnte.

Wenn über den Umfang der Brennraum-Einspritzdüse verteilt eine Mehrzahl von Fackelkanälen für heißes Verbrennungsgas angeordnet sind, die mit der Vorbrennkammer verbunden sind, kann einerseits eine sehr kompakte Ausgestaltung der Brenngaszuführungs- und Zündvorrichtung realisiert werden. Andererseits wird dadurch eine Vielzahl von Diffusionsflammen gezündet, die den für die Verbrennung in der Hauptbrennklammer verfügbaren Sauerstoff optimal ansaugen, wodurch eine stabile, gut geführte und schnelle Verbrennung stattfindet. Dadurch kann die Qualität der Verbrennung und der Wirkungsgrad verbessert und die Schadstoffemission des Gasmotors reduziert werden.

Besonders vorteilhaft ist es, wenn die Einspritzkanäle und die Fackelkanäle in Umfangsrichtung abwechselnd nebeneinander angeordnet sind. Damit ergeben sich in Umfangsrichtung versetzte sternförmige Einströmungen von Hauptbrenngas und heißem Verbrennungsgas in die Hauptbrennkammer, wodurch eine sichere Zündung und eine besonders gute räumliche Verteilung der Diffusionsflammen in der Hauptbrennkammer erreicht werden kann. Das kann noch dadurch verbessert werden, indem die Mündungsbereiche der Einspritzkanäle und die Fackelkanäle in die Hauptbrennkammer im Wesentlichen auf der gleichen axialen Position der Brennraum-Einspritzdüse angeordnet sind.

Durch die radiale Ausrichtung der Mündungsbereiche der Einspritzkanäle und der Fackelkanäle in die Hauptbrennkammer wird eine möglichst ungehinderte Einströmung von Hauptbrenngas und heißem Verbrennungsgas in die Hauptbrennkammer realisiert. Das verbessert die stabile und gute geführte Verbrennung noch weiter.

Wenn in der Brenngaszuführungs- und Zündvorrichtung eine ringförmige Vorbrennkammernut angeordnet ist, die über eine Vorbrennkammerleitung mit der Vorkammer verbunden ist und in die die Fackelkanäle münden, lässt sich eine sehr kompakte Ausführung der Brenngaszuführungs- und Zündvorrichtung realisieren.

Das mechanische Ventil ist vorzugsweise als Ventilstößel mit einem ersten Kolben an einem axialen Ende und mit einem von ersten Kolben axial beabstandeten zweiten Kolben ausgeführt, wobei der erste Kolben durch einen Schaft mit dem zweiten Kolben verbunden ist und zwischen ersten und zweiten Kolben ein Steuerraum ausgebildet ist, der mit der Hauptbrenngas-Zuführleitung verbunden ist. Damit wird ein Differentialkolben realisiert, der durch die wirkenden Drücke gesteuert werden kann. Das mechanische Ventil kann damit bei gleichbleibender Geometrie in verschiedenen Gasmotoren eingesetzt werden.

Hierzu kann für eine einfache konstruktive Ausführung vorteilhafterweise am ersten Kolben eine Kolbendichtfläche vorgesehen sein, die mit einer Ventildichtfläche in der Brenngaszuführungs- und Zündvorrichtung dichtend zusammenwirkt, und der zweite Kolben in einer Steuerausnehmung der Brenngaszuführungs- und Zündvorrichtung angeordnet ist, wobei die Umfangsfläche des zweiten Kolbens dichtend mit der Steuerausnehmung zusammenwirkt.

Um die Bewegung des Ventilstößels auf das notwendige beschränken zu können, ist vorteilhafter Weise vorgesehen, dass an den zweiten Kolben axial ein Anschlagzapfen anschließt,der mit einem Anschlag in der Brenngaszuführungs- und Zündvorrichtung zusammenwirkt. Damit kann insbesondere auch Schließgeschwindigkeit niedrig gehalten werden, da damit nur der für die Funktion notwendige Weg zurückgelegt werden muss.

Wenn um den Anschlagzapfen zwischen Anschlag und dem zweiten Kolben eine Feder angeordnet ist, kann die Feder die Schließbewegung unterstützen und auch für eine definierte Stellung des mechanischen Ventils sorgen.

Einer besonders vorteilhaften Ausgestaltung ist der zweite Kolben in einem Ventilgehäuse angeordnet ist, in dem ein Ventilanschlag ausgebildet ist, der mit einer Stirnfläche des zweiten Kolbens dichtend zusammenwirkt. Dadurch kann einerseits die Leckage von Hauptbrenngas durch das mechanische Ventil reduziert werden und andererseits kann das mechanische Ventil damit als Einsatz ausgeführt werden, der einfach ausgetauscht werden kann.

Mit einer zwischen Stirnfläche des zweiten Kolbens und dem Ventilgehäuse angeordneten Ventilfeder kann wieder die Schließbewegung unterstützt werden und auch für eine definierte Stellung des mechanischen Ventils gesorgt werden.

Aufgrund der thermischen Verhältnisse in der Brenngaszuführungs- und Zündvorrichtung kann es vorteilhaft sein, wenn an der Umfangsfläche des zweiten Kolbens eine Anzahl von Dichtelementen angeordnet wird. Die Dichtelemente können an die thermischen Belastungen angepasst werden. Außerdem wird durch die Dichtelemente eine übermäßige Leckage von Hauptbrenngas wirkungsvoll unterbunden.

Um eine Leckage von Hauptbrenngas abführen zu können, kann vorgesehen sein, dass im dem Steuerraum abgewandten und durch den zweiten Kolben abgeschlossenen Ende der Steuerausnehmung eine Leckageleitung mündet.

In einer ganz besonders vorteilhaften Ausgestaltung kann vorgesehen sein, dass die Leckageleitung mit einer Zündbrennstoff-Versorgungsleitung verbunden ist. Damit wird eine eventuelle Leckage von Hauptbrenngas in der Vorbrennkammer verwendet, was den Wirkungsgrad des Gasmotors erhöht. Hierbei ist es ganz besonders vorteilhaft, wenn für das Hauptbrenngas und den Zündbrennstoff für die Vorbrennkammer dasselbe Medium verwendet wird, das gegebenenfalls nur auf unterschiedlichem Druckniveau liegt. Abgesehen davon ist hierbei vorteilhafterweise keine Leckageleitung erforderlich ist, die vom Gasmotor wegführt.

Die gegenständliche Erfindung wird nachfolgend unter Bezugnahme auf die Figuren 1 bis 10 näher erläutert, die beispielhaft, schematisch und nicht einschränkend vorteilhafte Ausgestaltungen der Erfindung zeigen. Dabei zeigt
Fig.1 eine Ansicht einer erfindungsgemäßen Brenngaszuführungs- und Zündvorrichtung,
Fig.2 einen Schnitt durch die erfindungsgemäße Brenngaszuführungs- und Zündvorrichtung,
Fig.3, 4, 6, 7 und 9 Schnitte von Details der erfindungsgemäßen Brenngaszuführungs- und Zündvorrichtung,
Fig.5 den Ventilstößel des mechanischen Ventils der erfindungsgemäßen Brenngaszuführungs- und Zündvorrichtung,
Fig.8 einen Querschnitt der Brennraum-Einspritzdüse und
Fig.10 die erfindungsgemäße Brenngaszuführungs- und Zündvorrichtung mit Anschlüssen und Steuerung.

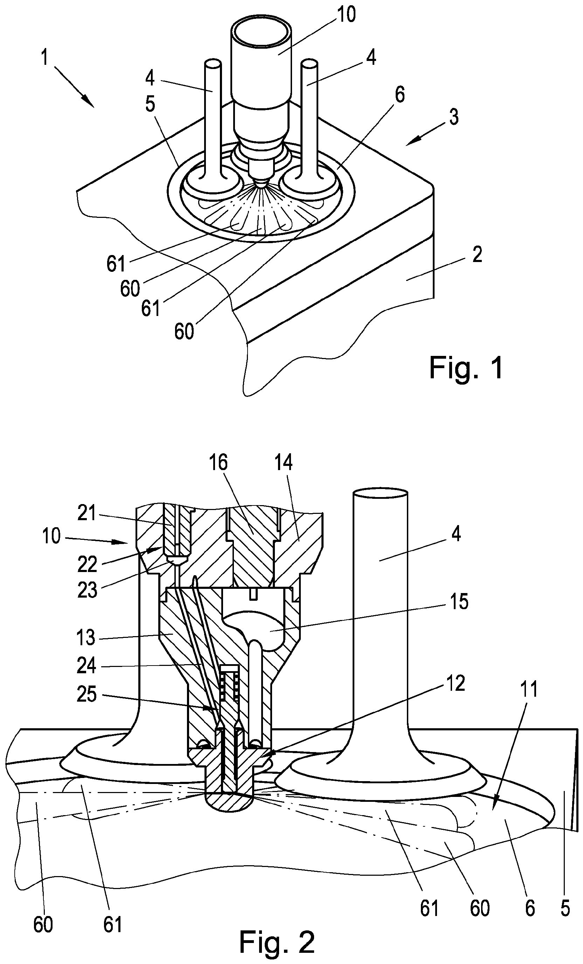

Fig.1 zeigt einen Ausschnitt eines Gasmotors 1 mit einem Zylinderblock 2 und einem nur angedeuteten Zylinderkopf 3 mit Ventilen 4. Im Zylinderblock 2 ist ein Zylinder 5 angeordnet, in dem sich ein Kolben 6 hin und her bewegt. Diese grundlegende Konstruktion und Funktion eines solchen Kolben-Verbrennungsmotors ist hinlänglich bekannt, weshalb hier nicht näher darauf eingegangen wird. Im Zylinderkopf 3 ist weiters eine erfindungsgemäße Brenngaszuführungs- und Zündvorrichtung 10 angeordnet, mit der Hauptbrenngas in die Hauptbrennkammer 11 des Zylinders 5 zugeführt wird und mit der die Verbrennung in der Hauptbrennkammer 11 gezündet wird, wie nachfolgend im Detail ausgeführt wird.

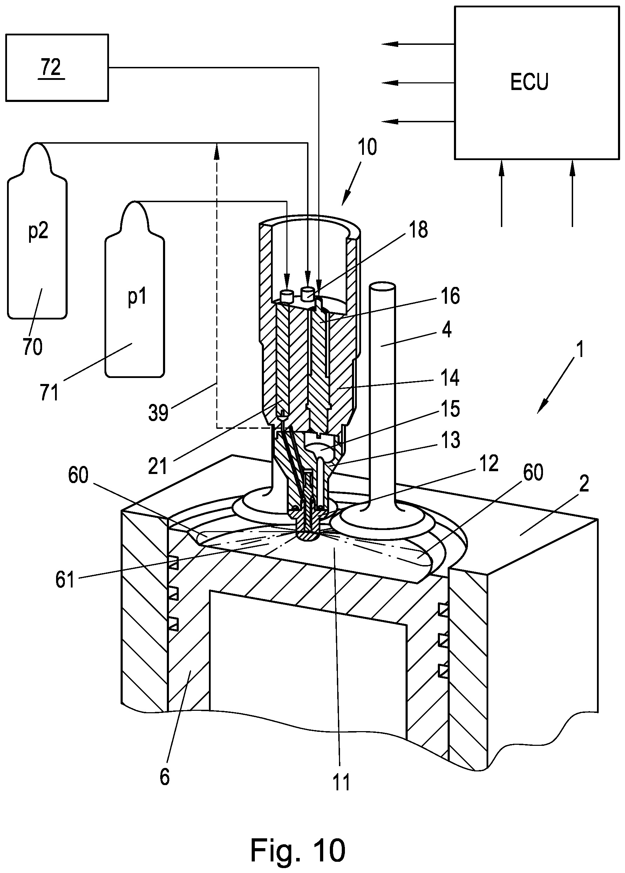

Dazu zeigt Fig.2 einen vergrößerten Schnitt durch den Zylinder 5 und die Brenngaszuführungs- und Zündvorrichtung 10 mit deren Hauptteilen. Die Brenngaszuführungs- und Zündvorrichtung 10 ist im Zylinderkopf 3 so angeordnet, dass diese mit einer Brennraum-Einspritzdüse 12 in die Hauptbrennkammer 11, die im Wesentlichen durch den freien Raum im Zylinder 5 zwischen Kolben 6 und dem Zylinderkopf 3 gebildet wird, hineinragt. Die Brennraum-Einspritzdüse 12 ist an einem axialen Ende der Brenngaszuführungs- und Zündvorrichtung 10 angeordnet. Die Brennraum-Einspritzdüse 12 ist an einem Mittelteil 13 der Brenngaszuführungs- und Zündvorrichtung 10 angeordnet, der wiederum an einem Oberteil 14 der Brenngaszuführungs- und Zündvorrichtung 10 angeordnet ist. Am Oberteil 14 sind auch, die in Fig.10 dargestellten, Anschlüsse für Zündbrennstoff, Hauptbrenngas, Steuerleitungen, elektrischer Versorgung, etc., vorgesehen, wie weiter unten noch ausführlicher beschrieben wird.

Die Aufteilung in Brennraum-Einspritzdüse 12, Mittelteil 13 und Oberteil 14 ist hierbei natürlich willkürlich. Die hier beschriebene Brenngaszuführungs- und Zündvorrichtung 10 ergibt eine fertigungstechnisch günstig herstellbare Brenngaszuführungs- und Zündvorrichtung 10.

In der Brenngaszuführungs- und Zündvorrichtung 10, hier im Mittelteil 13, ist eine Vorbrennkammer 15 vorgesehen, die im Wesentlichen als Ausnehmung im Mitteilteil 13 ausgeformt ist. In die Vorbrennkammer 15 mündet eine Fremdzündeinrichtung 16, wie z.B. eine Funkenentladungs-Zündkerze, eine Corona-Zündkerze, eine Plasma-Zündkerze, eine Laser-Zündeinrichtung, etc.

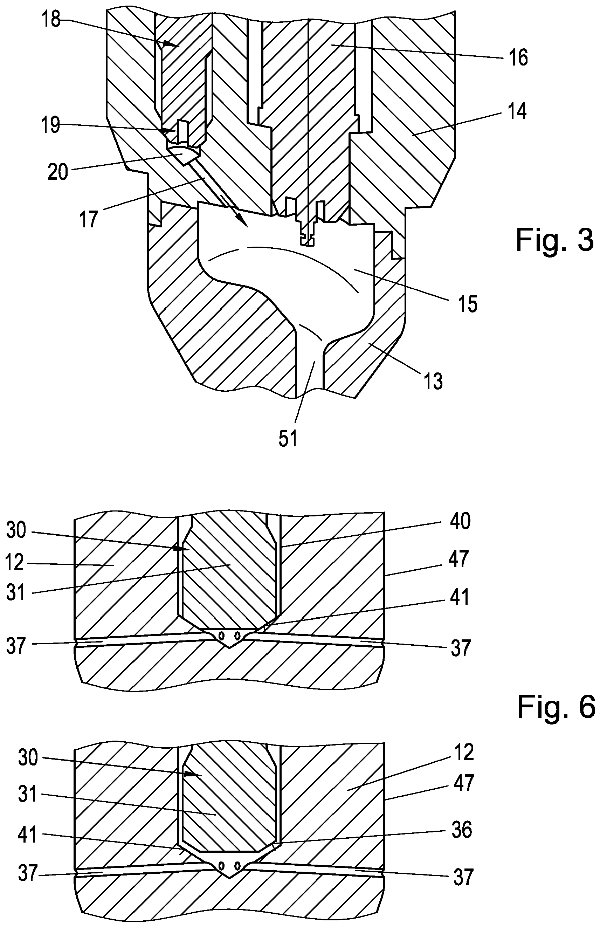

Ebenso mündet in die Vorbrennkammer 15 eine Zündbrennstoff-Zuführleitung 17 für Zündbrennstoff für die Vorbrennkammer 15, in der ein Vorbrennkammerventil 18 angeordnet ist, wie in Fig.3, die eine andere Schnittführung zeigt, dargestellt ist. Hierzu kann das Vorbrennkammerventil 18 als ein elektrisch betätigtes, elektronisch gesteuertes Vorbrennkammerventil 18, beispielsweise ein Magnetventil für gasförmige Zündbrennstoffe, ausgeführt sein und im Oberteil 14 angeordnet sein. Die Einspritzdüse 19 des Vorbrennkammerventils 18 mündet im gezeigten Ausführungsbeispiel in einen Zündbrennstoffraum 20, der in die Zündbrennstoff-Zuführleitung 17 übergeht. Damit kann über das Vorbrennkammerventil 18 Zündbrennstoff über die Zündbrennstoff-Zuführleitung 17 in die Vorbrennkammer 15 zugeführt werden, wie durch den Pfeil in Fig.3 angedeutet ist.

Im Oberteil 14 ist weiters ein, vorzugsweise elektrisch betätigtes, elektronisch gesteuertes Hauptbrenngasventil 21, angeordnet, dessen Einspritzdüse 22 in einen Hauptbrenngasraum 23 mündet (Fig.2). Der Hauptbrenngasraum 23 geht in eine Hauptbrenngas-Zuführleitung 24 über, über die Hauptbrenngas in die Brennraum-Einspritzdüse 12 zugeführt werden kann. Allgemein gesprochen ist das Hauptbrenngasventil 21 in der Hauptbrenngas-Zuführleitung 24 angeordnet und steuert die Zuführung von Hauptbrenngas in die Hauptbrennkammer 11.

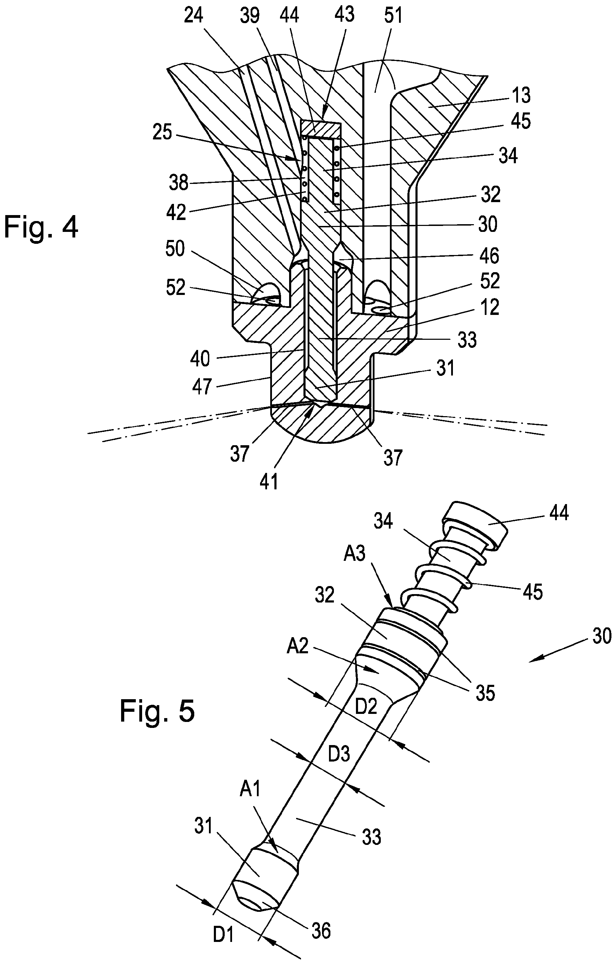

In der Brenngaszuführungs- und Zündvorrichtung 10 gemäß der beschriebenen, vorteilhaften Ausgestaltung ist außerdem noch ein mechanisches, differenzdruckbetätigtes Ventil 25 angeordnet, hier teilweise im Mitteilteil 13 und teilweise in der Brennraum-Einspritzdüse 12. Das mechanische Ventil 25 wird nun mit Bezugnahme auf die Fig.4 bis 6 im Detail beschrieben.

Das mechanische, differenzdruckbetätigte Ventil 25 besteht aus einem Ventilstößel 30 in Form eines Differentialkolbens. Der Ventilstößel 30 umfasst einen ersten Kolben 31 an einem axialen Ende des Ventilstößels 30 und einen zweiten Kolben 32, der in axialer Richtung beabstandet vom ersten Kolben 31 angeordnet ist. Der erste Kolben 31 und der zweite Kolben 32 sind zur Ausbildung des Ventilstößels 30 durch einen Schaft 33 miteinander verbunden. Der Durchmesser D1 des ersten Kolbens 31 und der Durchmesser D2 des zweiten Kolbens sind beide größer als der Durchmesser D3 des Schaftes 33, sodass sich ausgehend von Schaft 33 am ersten Kolben 31 eine erste Kolbenfläche A1 und am zweiten Kolben 32 eine zweite Kolbenfläche A2 ausbildet. An den zweiten Kolben 32 kann axial ein Anschlagzapfen 34 anschließen, der das zweite axiale Ende des Ventilstößels 30 ausbildet. An der äußeren Umfangsfläche des zweiten Kolbens 32 können Dichtelemente 35 angeordnet sein.

In der Brennraum-Einspritzdüse 12 ist eine axiale, nicht durchgehende Ventilausnehmung 40, hier in Form eines Sackloches, vorgesehen, dessen axiales, geschlossenes Ende eine Ventildichtfläche 41 ausbildet, die mit einer zugehörigen Kolbendichtfläche 36 am ersten Kolben 31 dichtend zusammenwirkt (Fig.6). Zur Ausbildung eines Ventils ist der Ventilstößel 30 mit seinem ersten axialen Ende mit dem ersten Kolben 31 in der Ventilausnehmung 40 angeordnet. Im gezeigten Ausführungsbeispiel ist die Kolbendichtfläche 36 an der freien Stirnfläche des ersten Kolbens 31 vorgesehen und die Ventildichtfläche 41 wird durch das axiale Ende der Ventilausnehmung 40 ausgebildet. Der erste Kolben 31 ist dabei radial beabstandet von der Ventilausnehmung 40 angeordnet, wodurch Hauptbrenngas um den und entlang des ersten Kolben 31 strömen kann. Die geometrische Form der Ventildichtfläche 41 und der Kolbendichtfläche 36 spielt hierbei keine Rolle.

Das geschlossene axiale Ende der Ventilausnehmung 40 ist über eine Mehrzahl von radial ausgerichteten, durchgehenden Einspritzkanälen 37 in der Brennraum-Einspritzdüse 12 mit der äußeren Umfangsfläche 47 der Brennraum-Einspritzdüse, und damit in der Einbausituation auch mit Hauptbrennkammer 11, verbunden, wobei der erste Kolben 31 je nach Stellung des Ventilstößels 30 die Zuströmung von Hauptbrenngas zu den Einspritzkanälen 37 sperrt (Fig.6 oben) oder freigibt (Fig.6 unten). Die Einspritzkanäle 37 sind dabei, vorzugsweise in regelmäßigen Abständen, über den Umfang der Brennraum-Einspritzdüse 12 verteilt angeordnet. Durch die radiale Ausrichtung der Einspritzkanäle 37 wird eine radiale Zuströmung des Hauptbrenngases in die Hauptbrennkammer 11 erzielt. Gegebenenfalls können die Einspritzkanäle 37 auch eine leichte tangentiale Ausrichtung haben, um zusätzlich auch eine tangentiale Einströmkomponente zu erzielen.

Im Mittelteil 13 ist eine axiale, nicht durchgehende Steuerausnehmung 42 vorgesehen, die koaxial zur Ventilausnehmung 40 und daran anschließend angeordnet ist. In der Steuerausnehmung 42 ist das zweite axiale Ende mit dem zweiten Kolben 32 des Ventilstößels 30 angeordnet. Die Umfangsfläche des zweiten Kolbens 32 ist dabei gegenüber der Steuerausnehmung 42 abgedichtet, beispielsweise mittels der Dichtelemente 35, z.B. in Form von Dichtringen ähnliche von Kolbenringen eines Verbrennungskolbens.

Der Ventilstößel 30 ist in axialer Richtung beweglich in der Ventilausnehmung 40 und der Steuerausnehmung 42 angeordnet. Das axiale, geschlossene Ende der Steuerausnehmung 42 bildet einen Anschlag 43 für den Ventilstößel 30. Gegebenenfalls kann in der Steuerausnehmung 42 auch ein Anschlagring 44 angeordnet sein, um die Lage des Anschlages 43 einstellen zu können. Zwischen Anschlag 43 und der Stirnfläche 55 des zweiten Kolbens 32 ist um den Anschlagzapfen 34 eine Ventilfeder 45 angeordnet, die den Ventilstößel 30 bzw. die Kolbendichtfläche 36 des ersten Kolbens 31 gegen die Ventildichtfläche 41 in eine definierte Position drückt.

In den Steuerraum 46, der sich in der Brenngaszuführungs- und Zündvorrichtung 10 durch die Ventilausnehmung 40 und die Steuerausnehmung 42 zwischen dem ersten Kolben 31 und dem zweiten Kolben 32 ausbildet, mündet die Hauptbrenngas-Zuführleitung 24. Der Durchmesser D1 des ersten Kolbens 31 ist kleiner als der Durchmesser D2 des zweiten Kolbens 32, sodass die erste Kolbenfläche A1 kleiner ist als die zweite Kolbenfläche A2. Nachdem das Hauptbrenngas den ersten Kolben 31 umströmt und damit auch am zugänglichen Bereich (der Bereich bis zur Kolbendichtfläche 36) der der Hauptbrennkammer 11 zugewandten Stirnfläche des ersten Kolbens 31 anliegt, ist der erste Kolben 31 je nach Geometrie und Position des Ventilstößels 30 hinsichtlich des Druckes des Hauptbrenngases teilweise oder zur Gänze druckausgeglichen. Wird nun über das Hauptbrenngasventil 21 und die Hauptbrenngas-Zuführleitung 24 Hauptbrenngas unter Druck in den Steuerraum 46 zugeführt, entsteht durch die größere Kolbenfläche A2 am zweiten Kolben 32 eine Ventilkraft, die den Ventilstößel 30 gegen den in der Ventilausnehmung 42 bzw. im Federraum 38 wirkenden Druck, und gegebenenfalls gegen die Vorspannkraft der Feder 35 wenn diese vorgesehen ist, gegen den Anschlag 43 drückt. Damit wird natürlich auch die Kolbendichtfläche 36 des ersten Kolbens 31 von der Ventildichtfläche 41 abgehoben (Fig.6 unten), wodurch die Einspritzkanäle 37 freigegeben werden und das unter Druck stehende Hauptbrenngas in die Hauptbrennkammer 11 einströmen kann.

Wird das Hauptbrenngasventil 21 wieder geschlossen, womit der Druck im Steuerraum 46 rasch abfällt, drückt der Druck im Federraum 38 und/oder die Feder 35 den Ventilstößel wieder gegen die Ventildichtfläche 41, womit das Einspritzen von Hauptbrenngas in die Hauptbrennkammer 11 unterbunden wird. Durch das elektrisch betätigte, elektronisch gesteuerte Hauptbrenngasventil 21 kann damit sehr einfach sowohl der Beginn der Einspritzung, als auch die Menge an eingespritzten Hauptbrenngas, beispielsweise durch das Ende der Einspritzung in Abhängigkeit vom aktuellen Druck des Hauptbrenngases, kontrolliert werden.

Aufgrund der notwendigen hohen Drücke des Hauptbrenngases und der hohen Temperaturen im Bereich der Hauptbrennkammer 11, können in der Regel keine Elastomerdichtungen als Dichtelemente 35 im zweiten Kolben 32 eingesetzt werden. Werden Dichtringe, ähnlich zu Kolbenringen, als Dichtelemente 35 eingesetzt, kommt es zwangsweise zu einer Leckage von Hauptbrenngas entlang der Umfangsfläche des zweiten Kolbens 32. In den Federraum 38, der sich in der Steuerausnehmung 42 zwischen zweiten Kolben 32 und dem Anschlag 43 ausbildet, kann daher in einer vorteilhaften Ausgestaltung eine Leckageleitung 39 münden. Über diese Leckageleitung 39 kann eine mögliche Leckage von Hauptbrenngas zwischen Kolben 32 und Steuerausnehmung 42 abgeführt werden.

Wenn als Zündbrennstoff und Hauptbrenngas dasselbe Medium verwendet wird, z.B. Erdgas, kann eine besonders vorteilhafte Ausgestaltung realisiert werden. Die Leckageleitung 39 ist hierzu mit der Versorgungsleitung von Zündbrennstoff zum Vorbrennkammerventil 18 der Vorbrennkammer 15 verbunden (angedeutet in Fig.10). Im Moment der Einblasung von Hauptbrenngas wird die dabei auftretende Leckagemenge über die Leckageleitung 39 zum Vorbrennkammerventil 18 geführt und dort verbraucht, sodass es zu keinen Verlusten von Hauptbrenngas kommt. Wenn das Hauptbrenngasventil 21 nach dem Einblasen wieder geschlossen wird, fällt der Druck im Steuerraum 46 rasch ab. Nachdem die Leckageleitung 39 nun aber mit der unter Druck stehenden Versorgungsleitung von Zündbrennstoff verbundenen ist, liegt an der dem Federraum 38 zugewandten Kolbenfläche A3 am zweiten Kolben 32 der Druck des Zündbrennstoffes für die Vorbrennkammer 15 an, wodurch eine Schließkraft entsteht, die versucht, den Ventilstößel 30 gegen die Ventildichtfläche 41 zu drücken. Dieser Schließkraft wirkt eine Gegenkraft entgegen, die sich einerseits aus dem wirkenden Differenzdruck zwischen Federraum 38 und Steuerraum 46 ergibt und andererseits durch den Druck in der Hauptbrennkammer 11, der über die Einspritzkanäle 37 auch auf einen Teil der freien Stirnfläche des ersten Kolbens 31 wirkt, hervorgerufen wird. Sobald die erzeugte Schließkraft größer als die Gegenkraft ist, wird das mechanische Ventil 25 geschlossen. Sofern vorhanden, unterstützt die Ventilfeder 45 dabei die Schließkraft. Die Ventilfeder 45 kann aber auch so schwach dimensioniert werden, dass damit praktisch nur eine definierte Lage des Ventilstößels 30 sichergestellt wird. In dieser Ausgestaltung könnte auf die Ventilfeder 45 aber auch gänzlich verzichtet werden, da das mechanische Ventil 25 durch den Druck des Zündbrennstoffes für die Vorbrennkammer 15 geschlossen wird und durch den Druck des Hauptbrenngases geöffnet wird.

Die Geometrie des Ventilstößels 30 und der Ventilfeder 35 können dabei natürlich an die Drücke von Zündbrennstoff und Hauptbrenngas angepasst werden, um die ordnungsgemäße Funktion des mechanischen, differenzdruckbetätigten Ventils 25 sicherstellen zu können.

Die oben beschriebenen Ausführungen erlauben eine sehr kompakte Ausführung des mechanischen Ventils 25 und insbesondere auch eine räumliche Trennung vom Hauptbrenngasventil 21. Damit ist es gleichfalls möglich, das Hauptbrenngasventil 21 räumlich von den thermisch hochbelasteten Teilen der Brenngaszuführungs- und Zündvorrichtung 10 in unmittelbarer Nähe zur Hauptbrennkammer 11 zu separieren. Ein weiterer Vorteil dieser Ausführungen ist darin zu sehen, dass das Totvolumen in der Brenngaszuführungs- und Zündvorrichtung 10 im Wesentlichen auf die Einspritzkanäle 37 beschränkt ist und damit so weit wie möglich minimiert werden kann, was insbesondere hinsichtlich der Vermeidung oder Minimierung der Rußbildung oder der unverbrannten Abgasbestandteile von Vorteil ist. Nicht zuletzt wird damit auch eine sehr kompakte Ausführung der gesamte Brenngaszuführungs- und Zündvorrichtung 10 möglich, was die Unterbringung in einem wassergekühlten Block des Gasmotors 1 ermöglicht, wodurch eine langlebige und zuverlässige Ausführung realisiert werden kann.

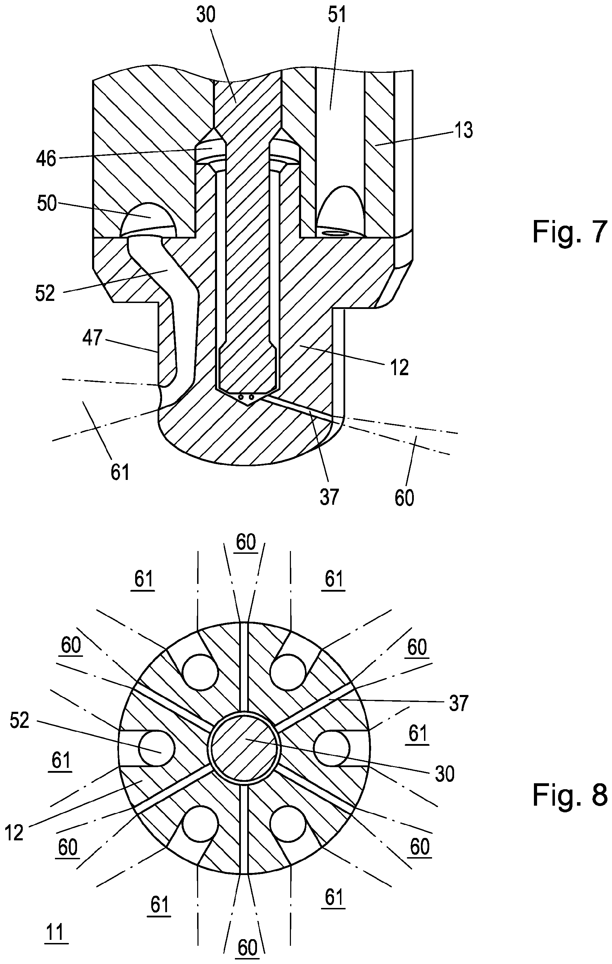

In der Brenngaszuführungs- und Zündvorrichtung 10, hier am der Brennraum-Einspritzdüse 12 zugewandten stirnseitigen Ende des Mittelteils 13, ist weiters eine ringförmige Vorbrennkammernut 50 vorgesehen, die über eine Vorbrennkammerleitung 51 mit der Vorbrennkammer 15 verbunden ist. Die Vorbrennkammernut 50 könnte aber gleichermaßen auch in der Brennraum-Einspritzdüse 12 angeordnet sein. In der Brennraum-Einspritzdüse 12 sind über den Umfang der Brennraum-Einspritzdüse 12 verteilt eine Anzahl von Fackelkanälen 52 angeordnet, die einerseits mit der äußeren Umfangsfläche 47 der Brennraum-Einspritzdüse12, und damit in der Einbausituation auch mit der Hauptbrennkammer 11, verbunden sind und andererseits in die ringförmige Vorbrennkammernut 50 münden, wie im Schnitt in Fig.7 dargestellt. Die Fackelkanäle 52 verbinden über die Vorbrennkammernut 50 und die Vorbrennkammerleitung 51 die Vorbrennkammer 15 mit der Hauptbrennkammer 11. Die Mündungsbereiche der Fackelkanäle 52 in die Hauptbrennkammer 11 werden dabei bevorzugt so ausgeführt, dass sich eine im Wesentlichen radiale Zuströmung aus den Fackelkanälen 52 in die Hauptbrennkammer 11 ergibt, wobei ebenfalls wieder eine tangentiale Zuströmkomponente vorgesehen sein kann.

Die Fackelkanäle 52 sind bevorzugt auf derselben axialen Position jeweils zwischen zwei in Umfangsrichtung benachbarten Einspritzkanälen 37 angeordnet, könnten aber z.B. auch jeweils axial oberhalb oder unterhalb der Einspritzkanäle 37, auch ohne Versatz in Umfangsrichtung, angeordnet sein. Auch eine beliebige Kombination dieser Anordnungen ist denkbar. Vorteilhaft hierbei ist lediglich eine möglichst gute räumliche Verteilung der Einspritzkanäle 37 und der Fackelkanäle 52, um eine hohe Anzahl von gut verteilten Diffusionsflammen in der Hauptbrennkammer 11 ausbilden zu können. Besonders vorteilhaft, sind die Einspritzkanäle 37 und die Fackelkanäle 52 bevorzugt in etwa auf gleicher axialer Position und in Umfangsrichtung jeweils abwechselnd nebeneinander angeordnet, wie insbesondere in Fig.8 angedeutet.

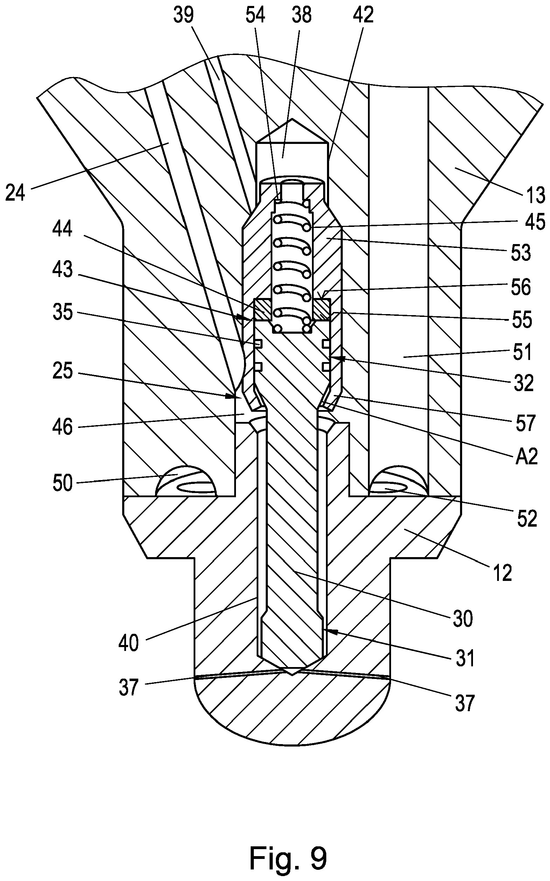

Mit Fig.9 wird noch eine alternative Ausführung des mechanischen Ventils 25 beschrieben. Der wesentliche Unterschied hierbei ist, dass das mechanische, differenzdruckbetätigte Ventil 25 ein Ventilgehäuse 53 aufweist, in dem die Ventilfeder 45 und der zweite Kolben 32 angeordnet sind. In dieser Ausführung fehlt auch der Anschlagzapfen 34. An einem ersten, dem Ventilstößel 30 abgewandten axialen Ende des Ventilgehäuses 53 ist ein Federanschlag 54, hier in Form einer radialen Abstufung, vorgesehen, an dem die Ventilfeder 45 mit einem Ende axial anliegt. Die Ventilfeder 45 liegt mit dem anderen Ende an der freien Stirnfläche 55 des zweiten Kolbens 32 an. Hierzu kann in der Stirnfläche 55 zur Zentrierung der Ventilfeder 45 auch eine Vertiefung vorgesehen sein, wie in Fig.9 angedeutet. Die Ventilfeder 45 übt damit wieder eine Federkraft in Schließrichtung des mechanischen Ventils 25 aus, die den Ventilstößel 30 gegen die Ventildichtfläche 41 presst und somit auch eine definierte Lage des Ventilstößels 30 sicherstellt. Auf die Ventilfeder 45 könnte wie oben beschrieben aber auch verzichtet werden. Im Ventilgehäuse 53 ist ein Ventilanschlag 56, hier in Form einer radialen Stufe, vorgesehen, die den Anschlag 43 des mechanischen Ventils 25 ausbildet. Auch in dieser Ausführung kann am Ventilanschlag 56 axial anliegend ein Anschlagring 44 angeordnet sein, um die Lage des Anschlages 43 einstellen zu können. In diesem Fall würde der Anschlagring 44 den Ventilanschlag 56 ausbilden. Der entscheidende Vorteil dieser Ausgestaltung ist darin zu sehen, dass durch den Ventilanschlag 56, an dem der zweite Kolben 32 mit seiner Stirnfläche 55 in der Offenstellung des mechanischen Ventils 25 (in Fig.9 gezeigt) anliegt, eine sichere Abdichtung gegenüber dem unter hohem Druck stehenden Hauptbrenngas im Steuerraum 46 erzielt wird. Wird Hauptbrenngas über die Hauptbrenngas-Zuführleitung 24 unter hohem Druck in dem Steuerraum 46 zugeführt, wirkt dieser Druck an der Ventilfläche A2 des zweiten Kolbens 32 und hebt den Ventilstößel 30 gegen die Federkraft und gegen den im Federraum 38 wirkenden Druck von der Ventildichtfläche 41 ab, bis die Stirnfläche 55 des zweiten Kolbens 32 am Ventilanschlag 56 axial anliegt. Damit kann kein Hauptbrenngas mehr in den Federraum 38 entweichen, womit die Leckage von Hauptbrenngas reduziert werden kann. Ansonsten übernehmen wieder die Dichtelemente 35 die Dichtfunktion wie oben beschrieben.

Das Ventilgehäuse 53 ermöglicht es auch, das Material (dynamische Beanspruchung durch Ventilstoß beim Anschlag, Wärmeausdehnung, etc.) und die Bearbeitung (Oberflächen, Beschichtungen, Laufeigenschaften, etc.) den Anforderungen des mechanischen Ventils 25 anzupassen und zwar unabhängig von der konkreten Ausführung der Brenngaszuführungs- und Zündvorrichtung 10.

Damit kann das mechanische Ventil 25 auch als austauschbarer Einsatz gefertigt werden, der im Verschleißfall einfach getauscht werden kann, da die Brenngaszuführungs- und Zündvorrichtung 10 in dieser Ausführung keinem durch das mechanische Ventil 25 hervorgerufenen Verschleiß unterliegt. Das Ventilgehäuse 53 wird dazu beispielsweise in der Steuerausnehmung 42 angeordnet, bevorzugt über einen Presssitz, um eine ausreichenden Halt sicherzustellen und um eine ausreichende Dichtfunktion zwischen Ventilgehäuse 53 und Steuerausnehmung 42 zu gewährleisten.

Das zweite axiale Ende 57 des Ventilgehäuses 53 kann auch umgeformt sein, um eine Schulter auszubilden, die den Ventilstößel 30 ohne Sicherungselement im Ventilgehäuse 53 hält. Die Schulter lässt sich z.B. einfach durch Umbördeln herstellen.

In einer Ausführung der Brenngaszuführungs- und Zündvorrichtung 10 mit gleichem Medium für Zündbrennstoff für die Vorbrennkammer 15 und für Hauptbrenngas und mit einer Leckageleitung 39, die mit der Versorgungsleitung für den Zündbrennstoff verbunden ist, kann in einer weiteren Ausgestaltung auch auf die Dichtelemente 35 verzichtet werden. Während des Schließens des mechanischen Ventils 25 wird ein Druck, der vom Verbrennungsdruck in der Hauptbrennkammer 11 abhängt, im Steuerraum 46 eingeschlossen. Aufgrund der notwendigen Durchmessertoleranzen ergibt sich zwangsweise ein geringer Spalt zwischen zweiten Kolben 32 und der Steuerausnehmung 42. Über diesen geringen Spalt kann daher im geschlossenen Zustand des mechanischen Ventils 25 ein Druckausgleich zwischen Leckageleitung 39 und der Hauptbrenngas-Zuführleitung 24 erfolgen. Damit kann zum Beginn der Einspritzung ein definierter, wiederholbarer Zustand im mechanischen Ventil 25 hergestellt werden. Dieser Druckausgleich sorgt damit für eine höhere zyklische Stabilität unabhängig vom Verbrennungsdruck in der Hauptbrennkammer 11 am Ende der Hauptbrenngaseinblasung wenn das mechanische Ventil 25 geschlossen wird und unabhängig von der aktuellen Last des Gasmotors 1.

Im Folgenden wird nun die bevorzugte Funktion der erfindungsgemäßen Brenngaszuführungs- und Zündvorrichtung 10 beschrieben.

Während des Saughubes strömt Luft, oder gleichwertig ein Luft/Abgasgemisch im Falle einer Abgasrückführung, in den Zylinder 5. Im darauffolgenden Kompressionshub wird die Luft komprimiert und die komprimierte Luft vom Zylinder 5 über die Fackelkanäle 52, die Vorbrennkammernut 50 und die Vorbrennkammerleitung 51 in die Vorbrennkammer 15 gedrückt. Über das Vorbrennkammerventil 18 wird eine gewünschte Menge Zündbrennstoff in die Vorbrennkammer 15 eingespritzt. Der eingespritzte Zündbrennstoff vermischt sich in der Vorbrennkammer 15 mit der darin befindlichen komprimierten Luft. Als Zündbrennstoff für die Vorbrennkammer 15 wird ein gasförmiger Brennstoff verwendet, vorzugsweise dasselbe Medium, das als Hauptbrenngas verwendet wird. Der Druck des Zündbrennstoffes muss dabei natürlich größer sein, als der wirkende Druck in der Vorbrennkammer 15. Der Zündbrennstoff wird dabei mittels des Vorbrennkammerventils 18 so dosiert eingespritzt, dass mit dem in der Vorbrennkammer 15 entstehenden mageren Zündbrennstoff/Luft-Gemisch sicher keine vorzeitige, unerwünschte Zündung stattfinden kann. Die Dosierung kann in Abhängigkeit vom aktuellen Lastzustand und von den Zündbrennstoffeigenschaften erfolgen, beispielsweise durch die Motorsteuerung. Zum richtigen Zündzeitpunkt (in der Regel vor dem oberen Totpunkt des Kolbens 6) wird das Zündbrennstoff/Luft-Gemisch in der Vorbrennkammer 15 mit der Fremdzündeinrichtung 16 gezündet. Der erfindungsgemäße Gasmotor 1 ist damit ein fremdgezündeter Gasmotor. In einem für eine optimale Verbrennung vorteilhaften zeitlichen Abstand wird über das Hauptbrenngasventil 21 Hauptbrenngas wie oben beschrieben über die Einspritzkanäle 37 in die Hauptbrennkammer 11 eingeblasen. Aufgrund der über den Umfang verteilt angeordneten Einspritzkanäle 37 wird das Hauptbrenngas sternförmig in radialer Richtung in die Hauptbrennkammer 11 eingeblasen, wie in Fig.8 durch den Hauptbrenngasstrahl 60 angedeutet ist. Durch die Zündung des Zündbrennstoff/LuftGemisches in der Vorbrennkammer 15 tritt heißes Verbrennungsgas aus den Fackelkanälen 52 aus. Durch die über den Umfang verteilt angeordnete Fackelkanäle 52 tritt das heiße Verbrennungsgas sternförmig in radialer Richtung in die Hauptbrennkammer 11 ein, wie in Fig.8 durch den Verbrennungsgasstrahl 61 angedeutet ist. In der Hauptbrennkammer 11 kommt der reine, eingeblasene Hauptbrenngasstrahl 60 mit dem heißen Verbrennungsgasstrahl 61 in Berührung, wodurch das Hauptbrenngas in der Hauptbrennkammer 11 entzündet wird und sich in der Hauptbrennkammer 11 eine Vielzahl von räumlich verteilten Diffusionsflammen ausbilden. Die Diffusionsflammen saugen den verfügbaren Sauerstoff rasch an, wodurch eine stabile, gute und schnelle Verbrennung in der Hauptbrennkammer 11 erreicht wird. Der Beginn der Einblasung von Hauptbrenngas kann dabei über das Hauptbrenngasventil 21 gesteuert werden, beispielsweise in Abhängigkeit von der aktuellen Last des Gasmotors 1. Die Einblasung, deren Dauer in erster Linie von der aktuellen Last bestimmt wird, erstreckt sich dabei in der Regel auch eine gewisse Zeitspanne nach der Zündung in der Vorbrennkammer 15. Die Zündung in der Vorbrennkammer 15 und der Beginn und die Dauer der Haupteinspritzung durch Einblasen von Brenngas in die Hauptbrennkammer 11 können unabhängig voneinander gesteuert werden, beispielswiese von der Motorsteuerung.

Durch das gesteuerte Hauptbrenngasventil 21 kann auch die Menge des zugeführten Hauptbrenngases an den aktuellen Lastzustand und an die Brenngaseigenschaften angepasst und genau dosiert werden, beispielsweise wieder durch das Motorsteuergerät ECU. Damit kann auch schnell auf rasche Lastwechsel reagiert werden.

Wie oben beschrieben erfolgt die Hauptbrenngaseinblasung vorzugsweise mittels eines vorgesteuerten mechanischen, differenzdruckbetätigten Ventils 25, das als Differentialkolben ausgeführt ist. Die Rückseite des zweiten Kolbens 32 (Fläche A3) kommuniziert dabei in einer bevorzugten Ausgestaltung über die Leckageleitung 39 und dem Federraum 38 mit dem Versorgungsdruck des Zündbrennstoffes des elektronischen Vorbrennkammerventils 18. Die Kolbenflächen A1, A2 des Differentialkolbens werden während der kurzen Zeitspanne des Öffnens des Hauptbrenngasventil 21 vom Gasdruck des Hauptbrenngases beaufschlagt, wobei der Gasdruck des Hauptbrenngases so größer als der Druck des Zündbrennstoffes für die Vorbrennkammer 15 gewählt wird, dass unter allen Umständen im Zusammenwirken mit dem auf die Druckangriffsfläche des ersten Kolbens 31 wirkenden Kompressionsdrucks in der Hauptbrennkammer 11 (der über die Einspritzkanäle 37 auf den Kolben 31 wirkt) ein sicheres Öffnen des mechanischen Ventils 25 gewährleistet wird. Damit kann die Funktion des mechanischen Ventils 25 nur über die Einstellung der Drücke des Hauptbrenngases und des Zündbrennstoffes für die Vorbrennkammer 15 sichergestellt werden.

Der Druck des Hauptbrenngases muss natürlich größer sein, als der erwartete Kompressionsdruck zum Zeitpunkt des Einblasens des Hauptbrenngases. Während der Verbrennung wird Hauptbrenngas in die Hauptbrennkammer 11 eingeblasen, womit der Druck des Hauptbrenngases natürlich auch größer sein muss, als der erwartete Verbrennungsdruck. Das Einblasen von Hauptbrenngas in die Hauptbrennkammer 11 sollte natürlich nur maximal solange dauern, wie Sauerstoff für die Verbrennung vorhanden ist.

Durch das magere Gemisch und den wirkenden hohen Druck in der Vorbrennkammer 15 kann eine Hochleistungsfunkenzündung erforderlich sein, um die notwendige Zündenergie und Zündspannung einbringen zu können, z.B. in Form einer modulierten kapazitiven Zündung wie in der DE 10 2008 006304 A1 beschrieben, oder als Corona-, Plasma- oder Laserzündung, oder ähnlichem. Ebenso kann vorgesehen sein, die Zündung in der Vorbrennkammer 15 über eine Überwachung des lonenstromes zu überwachen, wie z.B. in der WO 2013/045288 A1 beschrieben ist.

Eine weitere besonders vorteilhafte Ausgestaltung der Erfindung ergibt sich mit einer Mehrfacheinspritzung von Zündbrennstoff in die Vorbrennkammer 15. Hierbei wird zuerst eine Menge an Zündbrennstoff in die Vorbrennkammer 15 eingespritzt, mit der ein derart mageres Zündbrennstoff/Luft-Gemisch eingestellt wird, das sicher nicht vorzeitig zünden kann. Knapp vor der Zündung erfolgt dann eine weitere Einspritzung von Zündbrennstoff, die das Gemisch in der unmittelbaren Umgebung der Fremdzündeinrichtung 16 in der Vorbrennkammer 15 so weit anfettet, dass mit der Fremdzündeinrichtung 16 eine sichere Zündung, gegebenenfalls auch mit weniger Zündenergie, erreicht wird. Durch die zusätzliche Zuführung von Zündbrennstoff vor der Zündung, der eine deutlich niedrigere Temperatur hat als das komprimierte Gemisch in der Vorbrennkammer 15, wird das Zündbrennstoff/Luft-Gemisch zusätzlich gekühlt, womit die Gefahr einer unerwünschten Selbstzündung durch das zusätzlich Einspritzen von Zündbrennstoff reduziert werden kann. Wenn als Zündbrennstoff z.B. verflüssigtes Gas (z.B. Erdgas) verwendet wird, das in der tiefkalten Flüssigphase, z.B. bei ca. - 160°C, auf Druck gebracht wird und vor der Einspritzung verdampft wird, womit das entstehende Gas ebenfalls tiefkalt ist, kann bei diesem Vorgehen eine deutliche Temperaturabsenkung des Gemisches in der Vorbrennkammer 15 herbeigeführt werden.

Bevorzugt, aber nicht notwendigerweise, wird als Hauptbrenngas und als Zündbrennstoff das gleiche Medium verwendet, z.B. Erdgas, insbesondere verflüssigtes Erdgas, wobei lediglich unterschiedliche Drücke für den Zündbrennstoff für die Vorbrennkammer 15 und das Hauptbrenngas für die Hauptbrennkammer 11 notwendig sein können.

Mit Fig.10 ist noch eine mögliche Gesamtkonfiguration dargestellt. Der Gasmotor 1 wird von einem Motorsteuergerät ECU gesteuert (angedeutet durch die Pfeile). Mit dem Motorsteuergerät ECU werden insbesondere das Vorbrennkammerventil 18 und das Hauptbrenngasventil 21 gesteuert, vor allem der jeweilige Einspritzbeginn der das jeweilige Einspritzende in Abhängigkeit von den Drücken p1, p2 des Hauptbrenngases und des Zündbrennstoffes und einem aktuellen Lastzustand des Gasmotors (z.B. einem Drehmoment und/oder eine Drehzahl an der Abtriebswelle des Gasmotors 1). Das Vorbrennkammerventil 18 ist über eine geeignete Gasleitung mit einem Zündbrennstoffspeicher 70 für Zündbrennstoff verbunden. Das Hauptbrenngasventil 21 ist über eine geeignete Gasleitung mit einem Hauptbrenngasspeicher 71 für Hauptbrenngas verbunden. Im Falle gleicher Medien für das Hauptbrenngas und den Zündbrennstoff kann auch nur ein Speicher für beide vorgesehen sein. Das Motorsteuergerät ECU steuert auch die Fremdzündeinrichtung 16, insbesondere den Zündzeitpunkt und/oder die Zündenergie, gegebenenfalls auch über eigenes Zündsteuergerät 72. Unter Umständen kann über das Motorsteuergerät ECU auch ein Druck p1, p2 des Hauptbrenngases und/oder des Zündbrennstoffes eingestellt werden, beispielsweise über eine nicht dargestellte hinlänglich bekannte Druckregeleinrichtung.

## Patentansprüche

1. Verfahren zum Betreiben eines Gasmotors bei dem während des Kompressionshubes Luft oder ein Luft/Abgasgemisch in einem Zylinder (5) des Gasmotors (1) komprimiert wird und die komprimierte Luft in eine Vorbrennkammer (15) gedrückt wird, in die Vorbrennkammer (15) zur Ausbildung eines Luft/Zündbrennstoff-Gemisches ein Zündbrennstoff zugeführt wird, vor dem Ende des Kompressionshubes ein Hauptbrenngas in eine Hauptbrennkammer (11) des Zylinders (5) zugeführt wird und das Luft/Zündbrennstoff-Gemisch in der Vorbrennkammer (15) gezündet wird, wodurch heißes Verbrennungsgas von der Vorbrennkammer (15) in die Hauptbrennkammer (11) strömt und dort das eingeblasene Hauptbrenngas entzündet, **dadurch gekennzeichnet, dass** vor dem Zünden des Luft/Zündbrennstoff-Gemisches in der Vorbrennkammer (15) nochmals Zündbrennstoff in die Vorbrennkammer (15) zugeführt wird, um das Luft/Zündbrennstoff-Gemisch in der Vorbrennkammer (15) aufzufetten.

2. Verfahren nach Anspruch 1, **dadurch gekennzeichnet, dass** als Zündbrennstoff ein gasförmiger Brennstoff verwendet wird.

3. Verfahren nach Anspruch 2, **dadurch gekennzeichnet, dass** als Zündbrennstoff verflüssigtes Gas verwendet wird, das in der tiefkalten Flüssigphase auf Druck gebracht wird und vor der Einspritzung verdampft wird.

4. Verfahren nach Anspruch 2 oder 3, **dadurch gekennzeichnet, dass** als Zündbrennstoff dasselbe Medium verwendet wird, das als Hauptbrenngas verwendet wird.

5. Verfahren nach Anspruch 4, **dadurch gekennzeichnet, dass** der Zündbrennstoff und das Hauptbrenngas auf unterschiedlichen Druckniveaus liegen.

6. Verfahren nach einem der Ansprüche 1 bis 5 **dadurch gekennzeichnet, dass** die Dosierung in Abhängigkeit vom aktuellen Lastzustand und von den Zündbrennstoffeigenschaften erfolgt.

7. Verfahren nach einem der Ansprüche 1 bis 6 **dadurch gekennzeichnet, dass** das Zündbrennstoff/Luft-Gemisch in der Vorbrennkammer mit einer Fremdzündeinrichtung 16 gezündet wird.

8. Brenngaszuführungs- und Zündvorrichtung für einen Gasmotor (1) mit einer Brennraum-Einspritzdüse (12), in der eine Anzahl von Einspritzkanälen (37) für ein Hauptbrenngas vorgesehen sind und die Einspritzkanäle (37) mit einer Hauptbrenngas-Zuführleitung (24) für Hauptbrenngas verbunden sind, und in der Brennraum-Einspritzdüse (12) weiters eine Anzahl von Fackelkanälen (52) für heißes Verbrennungsgas vorgesehen sind und die Fackelkanäle (52) mit einer Vorbrennkammer (15) in der Brenngaszuführungs- und Zündvorrichtung (10) verbunden sind, wobei in die Vorbrennkammer (15) eine Zündbrennstoff-Zuführleitung (17) mündet und in der Zündbrennstoff-Zuführleitung (17) ein Vorbrennkammerventil (18) angeordnet ist, wobei das Vorbrennkammerventil (18) als elektrisch betätigtes, elektronisch gesteuertes Ventil ausgeführt ist, wobei zur Steuerung des Vorbrennkammerventils (18) und des Hauptbrenngasventils (21) ein Motorsteuergerät (ECU) vorgesehen ist, **dadurch gekennzeichnet, dass** das Motorsteuergerät (ECU) ausgebildet ist, um das Vorbrennkammerventil (18) und das Hauptbrenngasventil (21) gemäß einem Verfahren nach einem der Ansprüche 1 bis 7 anzusteuern.

9. Brenngaszuführungs- und Zündvorrichtung nach Anspruch 8, **dadurch gekennzeichnet, dass** das Vorbrennkammerventil (18) über eine Gasleitung mit einem Zündbrennstoffspeicher (70) für Zündbrennstoff verbunden ist, und dass das Hauptbrenngasventil 21 über eine Gasleitung mit einem Hauptbrenngasspeicher (71) für Hauptbrenngas verbunden ist.

10. Brenngaszuführungs- und Zündvorrichtung nach Anspruch 8, **dadurch gekennzeichnet, dass** für das Hauptbrenngas und den Zündbrennstoff ein Speicher für das gleiche Medium vorgesehen ist.

11. Brenngaszuführungs- und Zündvorrichtung nach einem der Ansprüche 8 bis 10, **dadurch gekennzeichnet, dass** das Motorsteuergerät (ECU) eine Fremdzündeinrichtung (16), insbesondere den Zündzeitpunkt und/oder die Zündenergie, gegebenenfalls auch über eigenes Zündsteuergerät (72), steuert.

12. Brenngaszuführungs- und Zündvorrichtung nach einem der Ansprüche 8 bis 11, **dadurch gekennzeichnet, dass** das Motorsteuergerät (ECU) ausgebildet ist, um einen Druck (p1, p2) des Hauptbrenngases und/oder des Zündbrennstoffes einzustellen, insbesondere über eine Druckregeleinrichtung.

## Claims

1. Method for operating a gas engine, wherein, during the compression stroke, air or an air/exhaust gas mixture is compressed in a cylinder (5) of the gas engine (1) and the compressed air is pressed into a pre-combustion chamber (15), into which pre-combustion chamber (15) an ignition fuel is fed to form an air/ignition fuel mixture, a main fuel gas is fed into a main combustion chamber (11) of the cylinder (5) before the end of the compression stroke, and the air/ignition fuel mixture is ignited in the pre-combustion chamber (15), whereby hot combustion gas flows from the pre-combustion chamber (15) into the main combustion chamber (11) and ignites the injected main fuel gas there, **characterized in that,** before the ignition of the air/ignition fuel mixture in the pre-combustion chamber (15), ignition fuel is again fed into the pre-combustion chamber (15) in order to enrich the air/ignition fuel mixture in the pre-combustion chamber (15).

2. The method according to claim 1, **characterized in that** a gaseous fuel is used as the ignition fuel.

3. The method according to claim 2, **characterized in that** liquefied gas is used as the ignition fuel, which is pressurized in the cryogenic liquid phase and vaporized before injection.

4. The method according to claim 2 or 3, **characterized in that** the same medium is used as the ignition fuel that is used as the main fuel gas.

5. The method according to claim 4, **characterized in that** the ignition fuel and the main fuel gas lie at different pressure levels.

6. The method according to any of the claims 1 to 5, **characterized in that** the metering is done as a function of the current load state and of the ignition fuel characteristics.

7. The method according to any of the claims 1 to 6, **characterized in that** the ignition fuel/air mixture in the pre-combustion chamber is ignited with an external ignition device (16).

8. A fuel gas feed and ignition apparatus for a gas engine (1), with a combustion chamber injection nozzle (12) having a number of injection channels (37) for a main fuel gas, wherein the injection channels (37) are connected to a main fuel gas feed line (24) for main fuel gas, and further a number of torch channels (52) for hot combustion gas are provided in the combustion chamber injection nozzle (12), said torch channels (52) being connected with a pre-combustion chamber (15) in the fuel gas feed and ignition apparatus (10), wherein an ignition fuel feed line (17) leads into the pre-combustion chamber (15) and a pre-combustion chamber valve (18) being arranged in the ignition fuel feed line (17), wherein the pre-combustion chamber valve (18) is embodied as electrically actuated, electronically controlled valve, wherein an engine control unit (ECU) is provided for controlling the pre-combustion chamber valve (18) and the main fuel gas valve (21), **characterized in that** the engine control unit (ECU) is provided for controlling the pre-combustion chamber valve (18) and the main fuel gas valve (21) according to a method according to any of the claims 1 to 7.

9. The fuel gas feed and ignition apparatus according to claim 8, **characterized in that** the pre-combustion chamber valve (18) is connected via a suitable gas line to an ignition fuel storage tank (70) for ignition fuel and that the main fuel gas valve (21) is connected via a gas line to a main fuel gas tank (71) for main fuel gas.

10. The fuel gas feed and ignition apparatus according to claim 8, **characterized in that** one tank for the same medium is provided for the main fuel gas and the ignition fuel.

11. The fuel gas feed and ignition apparatus according to any one of claims 8 to 10, **characterized in that** the engine control unit (ECU) controls an external ignition device (16), particularly the ignition time and/or the ignition energy, optionally also via a separate ignition control device (72).

12. The fuel gas feed and ignition apparatus according to any one of claims 8 to 11, **characterized in that** the engine control unit (ECU) is provided for setting a pressure (p1, p2) of the main fuel gas and/or of the ignition fuel, especially via a pressure regulation device.

## Revendications

1. Procédé permettant de faire fonctionner un moteur à gaz, procédé selon lequel, pendant la course de compression, de l'air ou un mélange air/gaz d'échappement est comprimé dans un cylindre (5) du moteur à gaz (1) et l'air comprimé est poussé dans une chambre de précombustion (15), un combustible d'allumage est introduit dans la chambre de précombustion (15) pour former un mélange air/combustible d'allumage, un gaz combustible principal est introduit dans une chambre de combustion principale (11) du cylindre (5) avant la fin de la course de compression et le mélange air/combustible d'allumage est allumé dans la chambre de précombustion (15), de telle sorte que du gaz de combustion chaud s'écoule à partir de la chambre de précombustion (15) dans la chambre de combustion principale (11) et y enflamme le gaz combustible principal insufflé, **caractérisé en ce que** du combustible d'allumage est introduit à nouveau dans la chambre de précombustion (15) avant l'allumage du mélange air/combustible d'allumage dans la chambre de précombustion (15), afin d'enrichir le mélange air/combustible d'allumage dans la chambre de précombustion (15).

2. Procédé selon la revendication 1, **caractérisé en ce qu'**on utilise en tant que combustible d'allumage un combustible gazeux.

3. Procédé selon la revendication 2, **caractérisé en ce qu'**on utilise en tant que combustible d'allumage du gaz liquéfié qui est mis en pression dans la phase liquide à très basse température et est évaporé avant l'injection.

4. Procédé selon la revendication 2 ou 3, **caractérisé en ce qu'**on utilise en tant que combustible d'allumage le même fluide que celui qui est utilisé en tant que gaz combustible principal.

5. Procédé selon la revendication 4, **caractérisé en ce que** le combustible d'allumage et le gaz combustible principal sont à des niveaux de pression différents.

6. Procédé selon l'une des revendications 1 à 5, **caractérisé en ce que** le dosage s'effectue en fonction de l'état de charge actuel et en fonction des propriétés du combustible d'allumage.

7. Procédé selon l'une des revendications 1 à 6, **caractérisé en ce que** le mélange combustible d'allumage/air est allumé dans la chambre de précombustion à l'aide d'un dispositif d'allumage commandé (16).

8. Dispositif d'introduction et d'allumage de gaz combustible pour un moteur à gaz (1) comprenant une buse d'injection de chambre de combustion (12) dans laquelle sont prévus un certain nombre de canaux d'injection (37) pour un gaz combustible principal, les canaux d'injection (37) étant reliés à une conduite d'introduction de gaz combustible principal (24) pour du gaz combustible principal, et en outre un certain nombre de canaux torches (52) pour du gaz de combustion chaud étant prévus dans la buse d'injection de chambre de combustion (12) et les canaux torches (52) étant reliés à une chambre de précombustion (15) dans le dispositif d'introduction et d'allumage de gaz combustible (10), une conduite d'introduction de combustible d'allumage (17) débouchant dans la chambre de précombustion (15) et une soupape de chambre de précombustion (18) étant disposée dans la conduite d'introduction de combustible d'allumage (17), la soupape de chambre de précombustion (18) étant conçue en tant que soupape commandée électroniquement et actionnée électriquement, une unité de commande de moteur (ECU) étant prévue pour la commande de la soupape de chambre de précombustion (18) et de la soupape de gaz combustible principal (21), **caractérisé en ce que** l'unité de commande de moteur (ECU) est conçue pour commander la soupape de chambre de précombustion (18) et la soupape de gaz combustible principal (21) conformément à un procédé selon l'une des revendications 1 à 7.

9. Dispositif d'introduction et d'allumage de gaz combustible selon la revendication 8, **caractérisé en ce que** la soupape de chambre de précombustion (18) est reliée à un accumulateur de combustible d'allumage (70) pour du combustible d'allumage par le biais d'une conduite de gaz, et **en ce que** la soupape de gaz combustible principal (21) est reliée à un accumulateur de gaz combustible principal (71) pour du gaz combustible principal par le biais d'une conduite de gaz.

10. Dispositif d'introduction et d'allumage de gaz combustible selon la revendication 8, **caractérisé en ce qu'**un accumulateur pour le même fluide est prévu pour le gaz combustible principal et le combustible d'allumage.

11. Dispositif d'introduction et d'allumage de gaz combustible selon l'une des revendications 8 à 10, **caractérisé en ce que** l'unité de commande de moteur (ECU) commande un dispositif d'allumage commandé (16), en particulier le point allumage et/ou l'énergie d'allumage, éventuellement également par le biais d'une unité de commande d'allumage (72) propre.

12. Dispositif d'introduction et d'allumage de gaz combustible selon l'une des revendications 8 à 11, **caractérisé en ce que** l'unité de commande de moteur (ECU) est conçue pour régler une pression (p1, p2) du gaz combustible principal et/ou du combustible d'allumage, en particulier par le biais d'un dispositif de régulation de pression.
